(19) **Europäisches Patentamt**

**European Patent Office**

**Office européen des brevets**

(11) **EP 1 672 330 A2**

(12) **EUROPÄISCHE PATENTANMELDUNG**

(43) Veröffentlichungstag:
**21.06.2006 Patentblatt 2006/25**

(51) Int Cl.:
***G01F 1/60*** *(2006.01)*

(21) Anmeldenummer: **06005303.0**

(22) Anmeldetag: **13.05.1997**

(84) Benannte Vertragsstaaten:
**CH DE DK FR GB IT LI NL**

(30) Priorität: **24.05.1996 DE 19621132**

(62) Dokumentnummer(n) der früheren Anmeldung(en) nach Art. 76 EPÜ:
**97107796.1 / 0 809 089**

(71) Anmelder: **Bailey-Fischer & Porter GmbH
37079 Göttingen (DE)**

(72) Erfinder:
• **Herwig, Jörg
37139 Adelebsen/Wibbecke (DE)**

• **Schäfer, Klaus
34346 Hann. Münden (DE)**

(74) Vertreter: **Tiesmeyer, Johannes et al
Weickmann & Weickmann
Patentanwälte
Postfach 86 08 20
81635 München (DE)**

Bemerkungen:
Diese Anmeldung ist am 15 - 03 - 2006 als Teilanmeldung zu der unter INID-Kode 62 erwähnten Anmeldung eingereicht worden.

(54) **Verfahren und Vorrichtung zur magnetisch-induktiven Durchflussmessung**

(57) Es wird ein Verfahren und eine Vorrichtung zur magnetisch-induktiven Durchflussmessung mit getaktetem bzw. getaktet umgepoltem Gleichfeld vorgeschlagen. Erfindungsgemäß ist beim Verfahren vorgesehen, dass der Spulenstrom mit zeitlich einander abwechselnden Frequenzen geschaltet wird, wobei die Anzahl der Perioden der einander abwechselnden Periodenzüge in unregelmäßiger Weise variiert wird. Dabei liegt eine weitere Besonderheit des Verfahrens darin, dass die aufgrund der quer zu dem Magnetfeld verlaufenden Strömung des Messmediums im Messrohr des magnetisch-induktiven Durchflussmessers induzierte Messspannung in jedem Taktzeitintervall eingeschalteten Spulenstroms bereits abgetastet wird, wenn das Magnetfeld seinen stationären Zustand noch nicht erreicht hat. Die Abtastwerte werden unter Verwendung empirisch ermittelter Korrekturfaktoren auf den Fall der Messung bei stationärem Magnetfeld hochgerechnet. Eine bevorzugte Variante des Verfahrens sieht vor, dass von Zeit zu Zeit Kalibrierungsmesswerte bei stationärem Magnetfeld aufgenommen werden, um die Korrekturfaktoren zu überprüfen und ggf. zu korrigieren. Gegenstand der Erfindung ist ferner ein magnetisch-induktiver Durchflussmesser zur Durchführung des Verfahrens.

Fig.6

EP 1 672 330 A2

**Beschreibung**

Die Erfindung betrifft ein Verfahren und eine Vorrichtung zur Messung der Durchflussrate eines fließfähigen Mediums nach dem Oberbegriff des Anspruchs 1 bzw. des Anspruchs 13.

Man unterscheidet im Wesentlichen zwei Formen der Magnetfelderregung von magnetisch-induktiven Durchflussmessern, nämlich die Magnetfelderregung in Form eines getakteten oder geschalteten (bzw. getaktet umgepolten) Gleichfeldes und die Magnetfelderregung in Form eines sinusförmigen Wechselfeldes.

Die getaktete (bzw. getaktet umgepolte) Gleichfelderregung zeichnet sich dadurch aus, dass sich ein stabiler Nullpunkt und eine stabile Messspanne des Messsignals erzielen lässt. Aufgrund unvermeidlicher Induktivitäten und Verluste im Spulenerregerkreis stellt sich bei der getakteten Gleichfelderregung der jeweilige stationäre Wert $B_0$ des B-Feldes jedoch nicht unverzögert relativ zu den Erregerstromumschaltzeitpunkten ein, sondern erst nach Ablauf einer Anstiegzeit. Dieses Problem wurde bisher dadurch umgangen, dass man die Erregerstromumschaltfrequenz so klein gewählt hat, dass sich der stationäre Zustand des Magnetfeldes B in jedem Taktzeitintervall eingeschalteten Spulenstroms einstellen konnte und dass man die Messspannung zwischen den Messelektroden ausschließlich in den Zeitabschnitten stationären Magnetfeldes detektiert hat. Die jeweiligen Anstiegszeiten in den Taktzyklen eingeschalteten Spulenstroms werden dabei nicht zur Erfassung der Messspannung ausgenutzt. Die Messung wird dort entsprechend ausgetastet.

Aus den vorstehend genannten Gründen waren die bisher nach dem Prinzip der Magnetfelderregung mit getaktetem bzw. getaktet umgepoltem Magnetfeld betriebenen magnetisch-induktiven Durchflussmesser vergleichsweise träge, so dass sich ihr Einsatzbereich im Wesentlichen auf Standard-Durchflussmessaufgaben, beispielsweise im Wasserversorgungs- und Abwasserbereich, beschränkt. Durchflussmessungen mit geschaltetem bzw. geschaltet umgepoltem Gleichfeld werden auch bereits zur Überwachung von relativ langsam ablaufenden Flüssigkeitsdosiervorgängen eingesetzt.

Der Betrieb von magnetisch-induktiven Durchflussmessern nach dem Prinzip der Magnetfelderregung in Form eines sinusförmigen, insbesondere netzsynchronen Wechselfeldes hat den Vorteil, dass die Messspannung mit einer hohen Abtastrate ununterbrochen gemessen werden kann, so dass Durchflussänderungen vergleichsweise schnell erfasst werden können. Derzeitige Einsatzbereiche für den Betrieb von magnetisch-induktiven Durchflussmessern mit sinusförmiger Wechselfelderregung sind beispielsweise die Überwachung von Kurzzeit-Dosiervorgängen, Durchflussmessungen mehrphasiger Messstoffe, Papierstoffe und Fruchtgemische sowie Durchflussmessungen bei vergleichsweise stark schwankenden Durchflüssen, wie sie bei dem Betrieb mit Kolbenpumpen auftreten.

Bei magnetisch-induktiven Durchflussmessern mit sinusförmiger Wechselfeld-Magnetfelderregung tritt jedoch das Problem der Instabilität von Nullpunkt und Messspanne und das Problem von Störungen durch netzsynchrone elektromagnetische Einströmungen auf.

Die vorliegende Erfindung bezieht sich auf den Betrieb von magnetisch-induktiven Durchflussmessern mit getakteter bzw. getaktet umgepolter Gleichfetderregung.

Aufgabe der Erfindung ist es, Wege aufzuzeigen, wie bei einem magnetisch-induktiven Durchflussmesser mit getakteter bzw. getaktet umgepolter Gleichfelderregung die verfügbaren Messinformationen effizienter ausgenutzt werden können, um insbesondere höhere Auflösungen oder eine schnellere Reaktion des magnetisch-induktiven Durchflussmessers zu erzielen.

Zur Lösung dieser Aufgabe wird das Verfahren gemäß Anspruch 1 und der magnetisch-induktive Durchflussmesser gemäß Anspruch 13 vorgeschlagen. Beim Verfahren gemäß Anspruch 1 schaltet man den Spulenerregerstrom mit wenigstens zwei verschiedenen, zeitlich einander abwechselnden Umschaltfrequenzen und tastet die Messspannung in vorbestimmter zeitlicher Beziehung zum jeweils vorausgehenden Spulenerregerstrom-Umschaltzeitpunkt in den Taktzeitintervallen eingeschalteten Spulenstroms ab. Als Besonderheit kommt hinzu, dass man die Anzahl der Perioden in den Periodenzügen der einander abwechselnden Umschaltfrequenzen in unregelmäßiger Weise variiert. Diesem Gesichtspunkt kommt im Rahmen der Erfindung selbständige Bedeutung zu.

Das Messverfahren nach Anspruch 1 eignet sich insbesondere zum Einsatz bei periodisch schwankenden Durchflüssen, wie sie etwa von Kolbenpumpen oder dgl. im Förderkreis des fließfähigen Mediums hervorgerufen werden können. Wird nämlich ein periodisch pulsierender Durchflussverlauf mit einer konstanten Frequenz (oder zwei einander periodisch abwechselnden festen Frequenzen) abgetastet, so kann es bei zeitlicher Synchronisation von Messwertabtastung und periodischer Durchflussänderung zu einem Schwebungsverhalten und somit zu einem systematischen Fehler des vorzugsweise eine mittlere Durchflussrate indizierenden Ausgangssignals (ein über mehrere Abtastwerte gemittelten Signals) eines magnetisch-induktiven Durchflussmessers kommen.

Bei dem erfindungsgemäßen Messbetrieb nach Anspruch 1 ist gewährleistet, dass sich die Messwerterfassung niemals über längere Zeit auf periodische Durchflussänderungen synchronisiert, so dass systematische Fehlmessungen aufgrund von Schwebungseffekten vermieden werden.

Weiterbildend wird vorgeschlagen, dass in den jeweiligen Taktzeitintervallen eingeschalteten Spulenstroms bereits der Zeitabschnitt zur Aufnahme von Messinformationen ausgenutzt wird, in dem das Magnetfeld seinen stationären Zustand noch nicht erreicht hat.

Die Abtastung der Messspannung in den Taktzeitintervallen eingeschalteten Spulenstroms kann so gesteuert sein, dass in jedem Taktzeitintervall mehrere Abtastwerte der Messspannung aufgenommen werden. Die Abtastwerte, die während der Zeitabschnitte detektiert werden, in denen das Magnetfeld seinen stationären Zustand noch nicht erreicht hat, können mittels Korrekturfaktoren korrigiert werden, um daraus die jeweilige Messspannung für den Fall der Messung bei stationärem Magnetfeld hochzurechnen. Die Messspannung bei stationärem Magnetfeld ist der zu ermittelnden Durchflussrate in guter Näherung proportional. Jedem im Zeitbereich des (noch) nicht stationären Magnetfeldes aufgenommenen Messspannungswert ist ein Korrekturfaktor zugeordnet, der von dem Messzeitpunkt des Messwertes innerhalb des betreffenden Taktzeitintervalls eingeschalteten Spulenstroms abhängt. Die Korrekturfaktoren können beispielsweise durch Kalibrierungsmessungen bzw. Systemparametermessungen bestimmt und in einem Speicher einer Auswerteeinrichtung bereitgehalten werden.

Der vorstehend erläuterte Messmodus erlaubt eine vergleichsweise hohe Abtastrate, wobei jedes Taktzeitintervall eingeschalteten Spulenstroms im Wesentlichen vollständig für die Aufnahme von Messwerten ausgenutzt werden kann. Das betreffende Messsystem kann relativ schnell auf Durchflussänderungen reagieren, so dass sich Anwendungen erschließen, die bisher dem Messbetrieb mit sinusförmiger Wechselfeldanregung vorbehalten waren.

Es sei darauf hingewiesen, dass insbesondere bei getaktet umgepolter Gleichfelderregung, bei der die Richtung des Magnetfeldes wechselweise umgekehrt wird, mit Spulenerregerstrom-Taktzeitintervallen gearbeitet werden kann, die kürzer sind als die Anstiegszeit, die das Magnetfeld zum Erreichen des stationären Zustands benötigt. Die Spulenerregerstrom-Umschaltfrequenz kann daher gegenüber konventionellen magnetisch-induktiven Durchflussmessern entsprechend erhöht werden.

Ein anderer Messmodus nach dem erfindungsgemäßen Verfahren sieht vor, dass in jedem Taktzeitintervall eingeschalteten Spulenstroms lediglich ein Spannungsmesswert erfasst wird, dessen Abtastintegrationszeitintervall (Messzeitfenster) jedoch so groß ist, dass es vorzugsweise nahezu den gesamten Zeitbereich des betreffenden Taktzeitintervalls überdeckt. Zur Abschätzung der Messspannung für den Fall der Messung bei stationärem Magnetfeld werden die betreffenden Messwerte mit Korrekturfaktoren normiert bzw. korrigiert, wobei die Korrekturfaktoren von der Breite des Abtastintegrationszeitintervalls (Messzeitfensters) und der relativen Lage des Abtastintegrationszeitintervalls innerhalb der betreffenden Taktzeitintervalle abhängen. Auch bei dem letztgenannten Messmodus ist es nicht notwendig, dass die Taktzeitintervalle eingeschalteten Spulenstroms jeweils so lang gewählt sind, dass das Magnetfeld seinen stationären Zustand erreicht.

Gemäß einer Weiterbildung des Verfahrens sind die Taktzeitintervalle bei einer der Frequenzen hinreichend lang, um ein stationäres Magnetfeld aufzubauen. In diesen (längeren) Taktzeitintervallen wird die Messspannung im Zustand des stationären Magnetfeldes aufgenommen, um Kalibrierungswerte bereitzustellen, mit denen die oben genannten Korrekturfaktoren überprüft und ggf. korrigiert werden können. Weichen die unter Verwendung der Korrekturfaktoren abgeschätzten Messspannungswerte über eine vorbestimmte Zeit systematisch von den entsprechenden Kalibrierungswerten ab, so erfolgt eine Korrektur der Korrekturfaktoren, um die Abschätzungen zu verbessern.

Bei der Messung mit jeweils einem Abtastwert pro Taktzeitintervall eingeschalteten Spulenstroms kann die Gewinnung von entsprechenden Kalibrierungswerten dadurch erfolgen, dass man in hinreichend langen Taktzeitintervallen das Abtastintegrationszeitintervall für die Messwertaufnahme verkleinert und ausschließlich in den Zeitbereich legt, in dem das Magnetfeld seinen stationären Zustand erreicht hat.

Vorzugsweise werden zwei Frequenzen gewählt, die keine gemeinsamen Harmonischen haben.

Die Anzahl der jeweiligen Perioden in den einander abwechselnden Periodenzyklen der verschiedenen Umschaltfrequenzen kann beispielsweise mittels eines Zufallszahlengenerators aus einem vorgegebenen Zahlenbereich statistisch ausgewählt werden.

Zur Durchführung des erfindungsgemäßen Verfahrens wird ein magnetisch-induktiver Durchflussmesser mit den Merkmalen des Anspruchs 13 vorgeschlagen. Der erfindungsgemäße Durchflussmesser erlaubt es, die Abtastintegrationszeitintervalle des Messwertintegrators in den Anstiegszeitbereich des Magnetfelds zu legen oder ggf. kontinuierlich auszudehnen und somit auch die Informationen auszunutzen, die die Messspannung bereits vor Erreichen des stationären Zustands des Magnetfeldes birgt.

Bevorzugte Weiterbildungen des erfindungsgemäßen Durchflussmessers sind in den Ansprüchen 14 bis 23 angegeben.

Die Erfindung wird nachstehend anhand der Figuren näher erläutert.

Fig. 1 zeigt in einem Blockschaltbild einen magnetisch-induktiven Durchflussmesser nach der Erfindung.

Fig. 2 zeigt in einem vereinfachten Diagramm ein charakteristisches Zeitverhalten der Messspannung und des Magnetfeldes in den Taktzeitintervallen eingeschalteten Spulenstroms und die Möglichkeit der mehrfachen Abtastung der Messspannung in dem Taktzeitintervall.

Fig. 3 zeigt in einem Erläuterungsdiagramm den Verlauf der Messspannung bei getaktet umgepolter Gleichfelderregung und die Möglichkeit der mehrfachen Abtastung pro Erregerstromtaktzeitintervall.

Fig. 4 zeigt in einem Erläuterungsdiagramm den zeitlichen Verlauf der Messspannung und die Möglichkeit der Einzelabtastung jedes Taktzeitintervalls mit einem breiten Abtastintegrationszeitintervall.

Fig. 5 zeigt in einem Erläuterungsdiagramm den Verlauf der Messspannung bei Erregung des Magnetfeldes mit zwei einander abwechselnden Erregungsfrequenzen und die Möglichkeit der Aufnahme von Kalibrierungswerten.

Fig. 6 zeigt in einem Erläuterungsdiagramm den zeitlichen Verlauf der Messspannung bei Magnetfelderregung mit zwei verschiedenen, einander abwechselnden Frequenzen, wobei die Anzahl der Perioden in den jeweiligen Periodenzyklen in unregelmäßiger Weise variiert.

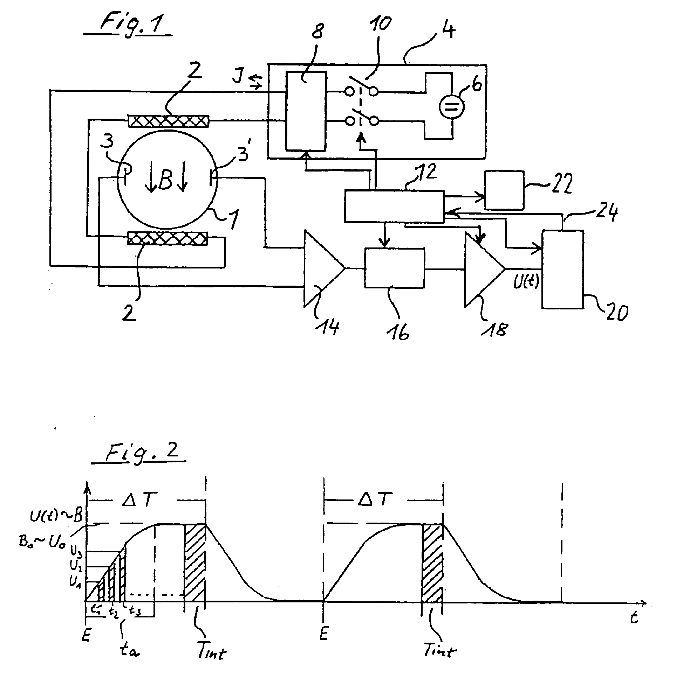

Fig. 1 zeigt in einem Blockschaltbild einen magnetisch-induktiven Durchflussmesser nach der Erfindung. Der Durchflussmesser weist ein Messrohr 1, eine elektromagnetische Spulenanordnung 2 zur Erzeugung eines das Messrohr 1 durchsetzenden Magnetfeldes (Induktionsflussdichte B) sowie ein Messelektrodenpaar 3, 3' auf, welches mit dem zumindest in einem geringfügigen Maße elektrisch leitfähigen, das Messrohr 1 durchströmenden Medium galvanisch in Kontakt steht. Die Baugrupe 1, 2, 3, 3' ist von herkömmlicher Bauart. Aufgrund der quer zu dem Magnetfeld verlaufenden Strömung des fließfähigen Mediums wird eine Messspannung induziert, die über die Elektroden 3, 3' abgegriffen werden kann.

Im Falle eines stationären B-Feldes ist die an den Elektroden 3, 3' abgegriffene Messspannung der Durchflussrate Q des fließfähigen Mediums in dem Rohr 1 in guter Näherung direkt proportional.

Messungen mit über längere Zeit stationärem B-Feld sind jedoch störanfällig. Magnetisch-induktive Durchflussmesser werden daher häufig mit einem getakteten bzw. geschalteten Gleichfeld betrieben, wobei der Treiberstrom J für die Spulenanordnung periodisch ein- und ausgeschaltet bzw. umgepolt wird, um das Magnetfeld entsprechend ein- und auszuschalten bzw. in seiner Richtung umzukehren.

Von dem Prinzip des getakteten Magnetfeldes macht auch die vorliegende Erfindung Gebrauch.

Bei dem in Fig. 1 dargestellten Durchflussmesser ist die Spulenanordnung 2 an einer steuerbaren Treiberschaltung 4 angeschlossen, die den Erregerstrom für die Spulenanordnung 2 liefert. Die Treiberschaltung 4 enthält eine Gleichstromquelle 6 für die Spulenanordnung 2, eine aus der Gleichstromquelle 6 gespeiste, steuerbare Umpol-Brückenschaltung 8 zur wahlweisen Änderung der Stromflussrichtung des Spulenstroms I und einen steuerbaren Ein/Aus-Schalter 10 zur wahlweisen Unterbrechung des Spulenstromes I.

Die Treiberschaltung 4 ist an einer Steuer- und Auswerteeinrichtung 12 angeschlossen, welche die Funktionen der Umpol-Brückenschaltung 8 und der Schalteinrichtung 10 in programmierter bzw. programmierbarer Weise mikroprozessorgesteuert kontrolliert. Die Steuer- und Auswerteeinrichtung 12 in Verbindung mit der Treiberschaltung 4 kontrolliert somit das Ein- und Ausschalten des Magnetfeldes B, die Dauer der Zustände: Magnetfeld eingeschaltet bzw. Magnetfeld ausgeschaltet und die Richtung des Magnetfeldes im Messrohr 1.

Auf der Messwerterfassungs- und -auswertungsseite weist der Durchflussmesser gemäß Fig. 1 einen an den Messelektroden 3, 3' angeschlossenen Eingangsverstärker 14, ein dem Eingangsverstärker 14 nachgeschaltetes Tiefpassfilter 16 mit wahlweise programmierbarer Grenzfrequenz, einen dem Tiefpassfilter 16 nachgeschalteten Analogverstärker 18, eine dem Analogverstärker 18 nachgeschaltete Messwertintegrationsstufe 20 mit einstellbarem Abtastintegrationszeitintervall, die Steuer- und Auswerteeinrichtung 12 und eine Anzeigeeinheit 22 auf. Die Steuer- und Auswerteeinrichtung 12 kontrolliert die einstellbare Grenzfrequenz des Filters 16 sowie die Verstärkung des Analogverstärkers 18. Die Steuer- und Auswerteeinrichtung 12 ist ferner dazu eingerichtet, die Dauer der Abtastintegrationezeitintervalle des Messwertintegrators 20 und die zeitliche Lage der Abtastintegrationszeitintervalle relativ zu Schaltereignissen der Treiberschaltung 4 zu kontrollieren.

Die Steuer- und Auswerteeinrichtung 12 erhält über die Datenleitung 24 digitalisierte Messwerte von dem Messwertintegrator 20. Eine Auswertroutine der Steuer- und Auswerteeinrichtung 12 wertet die digitalen Messwerte des Messwertintegrators 20 zur Bestimmung von Durchflussratenwerten aus und zeigt die ggf. gemittelte Durchflussrate mittels der Anzeige 22 an.

Das am Eingang des Messwertintegrators 20 anliegende Spannungssignal U(t) entspricht der von dem Filter 16 von höherfrequenten Störungen befreiten und durch den Verstärker 18 nachverstärkten Detektionsspannung zwischen den Messelektroden 3, 3'.

Zur weiteren Erläuterung der Erfindung wird nachstehend zunächst auf Fig. 2 Bezug genommen.

Fig. 2 zeigt qualitativ das zeitliche Verhalten des Magnetfeldes B für den Fall, dass der Spulenstrom periodisch ein- und ausgeschaltet wird. Für den Fall einer konstanten Durchflussrate des Messmediums entspricht der zeitliche Verlauf der an dem Messwertintegrator 20 anliegenden Spannung U(t) qualitativ dem zeitlichen Verlauf des B-Feldes. Aufgrund unvermeidlicher Induktivitäten und Verluste im Spulenerregerkreis stellt sich der stationäre Wert $B_0$ des B-Feldes nicht unverzögert relativ zu den Stromeinschaltzeitpunkten E ein, sondern erst nach Ablauf einer Anstiegszeit $t_a$. Wie erwähnt, verhält sich die an dem Messwertintegrator 20 anliegende Detektionsspannung U(t) bei konstanter Durchflussrate entsprechend.

Um das Problem der endlichen Einstellzeit des stationären Magnetfeldes innerhalb der Taktzyklen $\Delta T$ eingeschalteten Spulenstroms zu umgehen, hat man bisher die Einschalttaktzyklen $\Delta T$ hinreichend lang gewählt, so dass B und somit U(t) den stationären Zustand $B_0$ bzw. Uo erreichen konnte. Die Registrierung der Messspannung erfolgte dann jeweils am Ende der Taktzyklen $\Delta T$ eingeschalteten Spulenstroms über ein Abta-

stintegrationszeitintervall $T_{int}$, wie dies in Fig. 2 angedeutet ist. Bei dieser konventionellen Vorgehensweise ist die Taktfrequenz des Magnetfeldes ersichtlicherweise dadurch begrenzt, dass in jedem Taktzyklus das Erreichen des stationären Zustandes abgewartet werden muss. Ferner wird nur ein begrenzter Zeitabschnitt $T_{int}$ in jedem Taktzyklus $\Delta T$ für die eigentliche Messwerterfassung ausgenutzt.

Es wird daher bevorzugt, Messinformationen aus der Detektionsspannung $U(t)$ bereits in dem Zeitbereich ta zu gewinnen und auszuwerten, in dem der stationäre Zustand des B-Feldes sich noch nicht eingestellt hat. Probemessungen bei konstanter Durchflussrate haben ergeben, dass sich das stationäre Magnetfeld und entsprechend auch die Detektionsspannung $U(t)$ mit einem charakteristischen, von dem magnetischen Erregungssystem abhängigen Zeitverhalten aufbaut, das durch Kalibrierungs- bzw. Systemparametermessungen determinierbar ist.

Ist das prinzipielle Zeitverhalten $B(t)$ des Aufbaus des stationären Feldes $B_0$ und dementsprechend das Zeitverhalten $U(t)$ des Aufbaus der stationären Spannung $U_0$ bekannt, so können bereits während der Anstiegszeit $t_a$ zu bestimmten Zeiten $t_i$ aufgenommene Messwerte $U$ der Spannung $U(+)$ für die Bestimmung der Durchflussrate des fließfähigen Mediums in dem Messrohr 1 herangezogen werden. Stellt sich der stationäre Wert $U_0$ der Messspannung beispielsweise entsprechend der Sprungantwortfunktion eines linearen Systems erster Ordnung mit dem Zeitverhalten:

$$U(t) = U_0 \, (1\text{-}e^{-e/\tau})$$

in jedem Taktzyklus $\Delta T$ eingeschalteten Spulenstroms ein, so gilt für einen zum Zeitpunkt $t_i$ gemessenen Spannungswert $U_i$ :

$$k_i U_i = U_0 \text{ mit}$$

$$k_i = 1/1\text{-}e^{-ti/\tau}).$$

Bei bekannter Zeitkonstante $\tau$, die durch Systemparametermessungen ermittelt werden kann, sind den einzelnen Messpunkten $t_i$ somit Korrekturfaktoren $k_i$ zugeordnet, die dazu herangezogen werden können, die jeweils gesuchten stationären Werte $U_0$, die der zu ermittelnden Durchflussrate in guter Näherung proportional sind, aus den zu den Zeitpunkten $t_i$, gemessenen Spannungswerten $U_i$ abzuschätzen.

Bei dem Durchflussmesser der vorliegenden Erfindung übernimmt die Steuer- und Auswerteeinrichtung 12 die Steuerung der zeitlichen Abläufe der Schaltung des Spulenerregerstroms und der Messwertnahme und ferner die numerische Auswertung der Messergebnisse. Sie legt insbesondere die Zeitpunkte $t_i$ der Messwertnahmen durch den Messwertintegrator 20 relativ zu den Umschaltzeitpunkten des Spulenerregerstromes und die Dauer der jeweiligen Integrationszeitintervalle für die Aufnahme der Messwerte $U_i$ programmgesteuert fest.

Der Durchflussmesser nach der Erfindung gemäß Fig. 1 erlaubt die Durchführung unterschiedlicher Messmodi für die Durchflussratenbestimmung unter der Prämisse, dass die verfügbaren Messinformationen besser ausgenutzt werden als bisher. Bevorzugte Messmodi werden nachstehend erläutert.

### 1. Messmodus 1

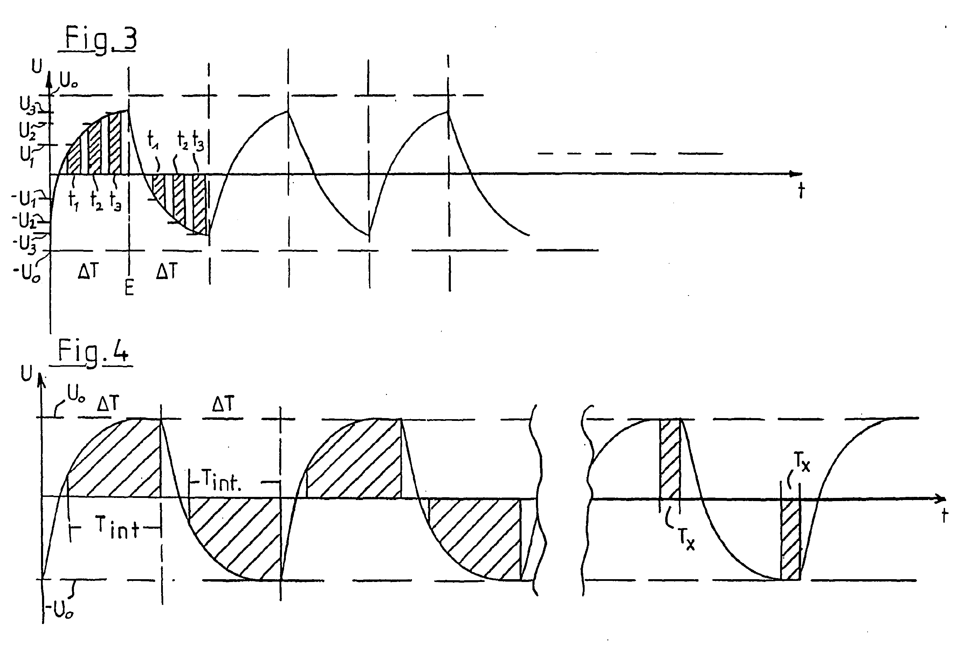

Die Steuer- und Auswerteeinrichtung 12 steuert die Umpol-Brückenschaltung 8 derart, dass die Stromrichtung des Spulenerregerstroms periodisch mit einer Frequenz f von beispielsweise 25 Hz umgekehrt wird. Ein beispielhafter qualitativer Verlauf der dabei an dem Messwertintegrator 20 anliegenden Spannung $U(t)$ ist in Fig. 3 dargestellt. Im Fall der Fig. 3 sei die Umschaltfrequenz des Spulenerregerstroms I so hoch, dass die Spannung $U(t)$ den stationären Zustand $U_0$ bzw. $-U_0$ nicht erreicht.

Der Messwertintegrator 20 tastet die Spannung $U(t)$ unter der Steuerung der Steuer- und Auswerteeinrichtung 12 zu den Zeitpunkten $t_1, t_2.... t_n$, in jeder Halbperiode $\Delta T$ ab und gibt entsprechende digitalisierte Messwerte $U_1, U_2.... U_n$ über die Datenleitung 24 an die Steuer- und Auswerteeinrichtung 12 ab. In der Steuer- und Auswerteeinrichtung 12 sind Korrekturfaktoren $k_i$ gespeichert, die den betreffenden Messzeitpunkt $t_i$ in der bereits oben beschriebenen Weise zugeordnet sind. Zur Auswertung werden die Messwerte $U_1, U_2 .... U_n$ mit den betreffenden Korrekturfaktoren $k_1, k_2 .... k_n$ multipliziert, um betreffende Werte $U_{01}, U_{02} .... U_{0n}$ abzuschätzen. Zur Abschätzung eines einheitlichen stationären Wertes $U_0$ bzw. -Uo für die betreffende Halbperiode $\Delta T$ kann die Steuer- und Auswerteeinrichtung 12 aus den ermittelten Werten $U_{01} .... U_{0n}$ einen Mittelwert bilden. Zur Eliminierung von Offset-Störungen ist die Steuer- und Auswerteeinrichtung 12 ferner in der Lage, den in jeder Periode $2\Delta T$ abgeschätzten Wert -Uo von dem in der gleichen Periode abgeschätzten Wert $+U_0$ zu subtrahieren.

Wie aus Fig. 3 ersichtlich, werden die verfügbaren Messinformationen ohne die bisherigen Wartezeiten konventioneller Durchflussmesssysteme mit geschaltetem Gleichfeld optimal ausgenutzt. Da der stationäre Zustand des Magnetfeldes nach Umschalten des Spulenstroms nicht abgewartet werden muss, kann mit einer entsprechend höheren Stromumschaltfrequenz gearbeitet werden, was eine schnellere Reaktion des erfindungsgemäßen Durchflussmessers auf Durchflussänderungen möglich macht. Hierbei werden relativ genaue Messergebnisse erhalten, wenn die Durchflussrate über wenigstens eine Periode 2ΔT im Wesentlichen konstant ist.

Die Korrekturfaktoren $k_i$ können mittels Kalibrierungsrnessungen empirisch ermittelt werden und hängen von der jeweiligen Antwortfunktion des Erregungssystems für das Magnetfeld auf das Ein- und Ausschalten bzw. Umschalten des Spulenstroms hin ab.

Der Messmodus 1 kann bei Bedarf auch mit einer geringeren Stromumschaltfrequenz betrieben werden, so dass sich in jeder Halbperiode ΔT der stationäre Zustand des Magnetfeldes B und der Messspannung U einstellen kann. Wenngleich in diesem Fall gegenüber herkömmlichen magnetisch-induktiven Durchflussmesssystemen keine signifikante Verkürzung der Stromumschaltperioden 2ΔT vorliegt, so werden die verfügbaren Messinformationen dennoch besser ausgenutzt, da bereits während der unvermeidlichen Anstiegszeit des Magnetfeldes B auswertbare Messergebnisse erhalten werden. Die nach Erreichen des stationären Zustandes aufgenommenen Messwerte Uo können von der Steuer- und Auswerteeinrichtung 12 dazu herangezogen werden, die Korrekturwerte $k_i$ zu überprüfen und ggf. zu korrigieren bzw. zu aktualisieren, um beispielsweise Änderungen der Korrekturwerte $k_i$ aufgrund von Temperaturänderungen zu berücksichtigen.

Die entsprechend dem Messmodus 1 aufgenommenen Messwerte $U_i$ können auch in der nachstehend erläuterten alternativen Weise ausgewertet werden, um Ergebnisse über die Durchflussrate zu erhalten.

Bei dieser alternativen Auswertemethode führt die Steuer- und Auswerteeinrichtung im Wege der Ausgleichsrechnung eine Kurvenanpassung nach der Methode der kleinsten Fehlerquadrate unter Verwendung der Messwerte $U_i$ durch. Folgt die Detektionsspannung U(t) beispielsweise einer Funktion der algebraischen Form: $U(t) = Uo (1-e^{-t/\tau})$, so kann durch eine derartige best-fit-Rechnung nicht nur der Parameter τ (Zeitkonstante) sondern auch der gesuchte Wert $U_0$ optimal abgeschätzt werden.

Es sei jedoch darauf hingewiesen, dass auch diese Auswertevariante bei anderen Systemantwortfunktionen als der vorstehend beispielhaft angegebenen funktioniert, sofern die allgemeine algebraische Form bekannt ist.

2. Messmodus

Der unter Bezugnahme auf Fig. 4 erläuterte zweite Messmodus unterscheidet sich hinsichtlich der zeitlichen Steuerung des Magnetfeldes B nicht von dem unter Bezugnahme auf Fig. 3 erläuterten ersten Messmodus. Im Unterschied zum ersten Messmodus wird der Spannungsverlauf U(t) jedoch nicht mit mehreren Messwerten pro Halbperiode ΔT abgetastet, sondern es wird pro Halbperiode ΔT jeweils ein Messwert U aufgenommen, wobei jedoch ein sehr breites Abtastintegrationszeitintervall $T_{int}$ für die Integration der betreffenden Messwerte gewählt wird. Da sich das Abtastintegrationszeitintervall $T_{int}$ (auch) über einen Bereich der Anstiegszeit ta erstreckt, in der die Spannung U den stationären Wert Uo noch nicht erreicht hat, sind die betreffenden Messwerte U mit einem Korrekturfaktor zu korrigieren, um den Wert $U_0$ abzuschätzen. Der betreffende Korrekturfaktor k hängt von der Breite des Abtastintegrationszeitintervalls $T_{int}$ und von der relativen Lage des Abtastintegrationszeitintervalls $T_{int}$ innerhalb der betreffenden Halbperiode ΔT ab und kann mittels Kalibrierungsmessung empirisch bestimmt werden. Entsprechende Korrekturfaktoren werden in einem Speicher der Steuer- und Auswerteeinrichtung 12 bereitgehalten.

Auch bei dem zweiten Messmodus werden die verfügbaren Messinformationen unter Vermeidung von Wartezeiten optimal ausgenutzt.

Sofern in dem zweiten Messmodus mit einer Stromumschaltfreguenz gearbeitet wird, bei der die Detektionsspannung U(t) den stationären Wert $U_0$ jeweils erreichen kann, wird vorgeschlagen, das Abtastintegrationszeitintervall $T_{int}$ von Zeit zu Zeit in einigen Perioden 2ΔT zu verkleinern und ausschließlich in den stationären Bereich zu legen, wie dies bei $T_x$ in Fig. 4 angedeutet ist. Die dabei ermittelten stationären Messspannungswerte $U_0$ können dazu herangezogen werden, die vorstehend genannten Korrekturfaktoren k zu korrigieren bzw. zu aktualisieren, um etwaige Änderungen der Korrekturfaktoren, beispielsweise aufgrund von Änderungen der Temperatur, zu berücksichtigen. Eine solche Aktualisierung der Korrekturparameter findet dann statt, wenn die über mehrere Perioden mit dem Abtastintegrationszeitintervall $T_x$ gemessenen stationären Werte $U_0$ und die mit diesen Messwerten Uo korrespondierenden und unter Verwendung der k-Werte abgeschätzten $U_0$ Werte im Wesentlichen konstant sind, jedoch voneinander abweichen.

3. Messmodus

Der erfindungsgemäße dritte Messmodus unterscheidet sich von dem ersten und zweiten Messmodus dadurch, dass unter der Steuerung der Steuer- und Auswerteeinrichtung 12 die Umschaltfrequenz des Erregerstroms periodisch zwischen zwei Frequenzwerten, beispielsweise $f_1$ = 25 Hz und $f_2$ = 6,25 Hz, wechselt.

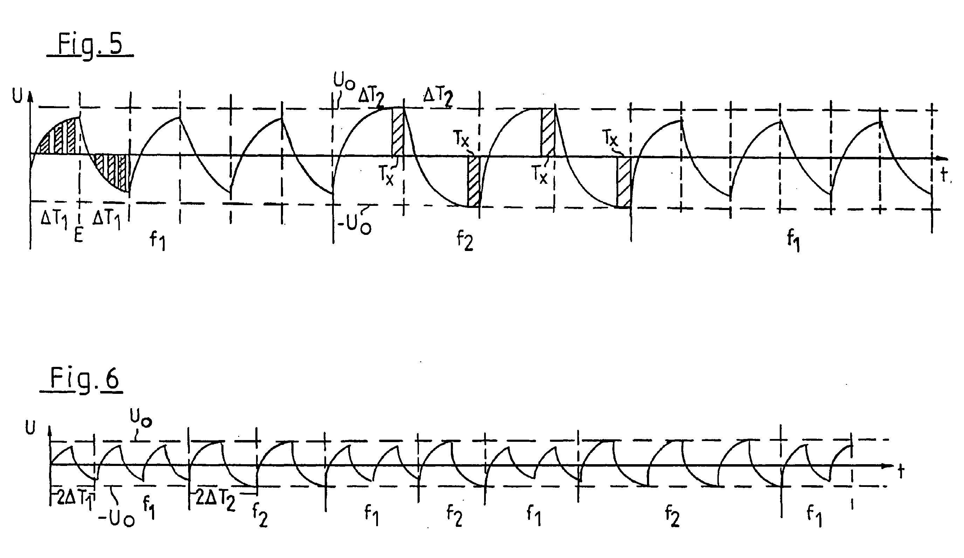

Dabei ergibt sich ein zeitlicher Verlauf der Detektionsspannung U(t) am Eingang des Messwertintegrators 20, wie er qualitativ in Fig. 5 skizziert ist. Wie aus Fig. 5 zu erkennen ist, sind die Stromumschaltperioden $2ΔT_2$ bei der kleineren Frequenz $f_2$ so lang, dass die Spannung U(t) jeweils ihren stationären Wert $U_0$ erreichen kann, wohingegen dies bei der höheren Frequenz $f_1$ nicht der Fall ist.

Die Messwerterfassung mittels dem Messwertintegrator 20 kann während der Phasen höherer Frequenz in der unter Bezugnahme auf den ersten Messmodus oder in der unter Bezugnahme auf den zweiten Messmodus beschriebenen Weise erfolgen. Während der längeren Stromumschaltperioden (Frequenz $f_2$) wird

jedoch (zumindest auch) ein Spannungsmesswert ausschließlich im stationären Bereich (vgl. Abtastintegrationszeitintervall $T_x$) aufgenommen. Sofern diese Kontrollwerte der stationären Spannung $U_0$ und die korrespondierenden Schätzwerte $U_0$ über einen längeren Zeitraum konstant, aber systematisch ungleich sind, werden die gemessenen Kontrollwerte $U_0$ zur Überprüfung der Korrekturwerte $k_i$ bzw. k herangezogen, die in der oben beschriebenen Weise zur Abschätzung der $U_0$-Werte aus den Messungen mit der höheren Stromumschaltfrequenz $f_1$ herangezogen werden. Ergibt sich also aus einem Vergleich der während der Frequenz $f_2$ jeweils im stationären Zustand gemessenen Werte $U_0$ mit den während der Messphasen mit der Frequenz $f_1$ abgeschätzten Werten für $U_0$, dass die Korrekturfaktoren $k_i$ korrekturbedürftig sind, so aktualisiert die Steuer- und Auswerteeinrichtung 12 die Korrekturfaktoren $k_i$ entsprechend.

Im Ergebnis kann auf diese Weise die Messspanne und der Nullpunkt der Messungen überprüft und ggf. korrigiert werden.

4. Messmodus

Der unter Bezugnahme auf Fig. 6 erläuterte vierte Messmodus wird ebenfalls mit wenigstens zwei im zeitlichen Verlauf einander abwechselnden Stromumschaltfrequenzen $f_1$, $f_2$ des Erregerstromes betrieben. Die Frequenzen $f_1$ und $f_2$ haben untereinander keine gemeinsamen Oberwellen. Die höhere Frequenz $f_1$ kann so gewählt sein, dass sich in den zugehörigen Halbperioden stationäre Zustände des Magnetfeldes B einstellen können.

Besonderheit des Messmodus Nr. 4 ist nun, dass die Zyklen kürzerer Perioden ($f_1$) und längerer Perioden ($f_2$) einander nicht regelmäßig periodisch abwechseln. Die Anzahl der Erregerzyklen beider Frequenzen wird mittels eines Zufallszahlengenerators der Steuer- und Auswerteeinrichtung 12 stochastisch bestimmt, wobei die maximale Anzahl aufeinander folgender Zyklen gleicher Frequenz einstellbar begrenzt ist.

Die Messwerterfassung und -auswertung kann in dem vierten Messmodus auf eine der vorstehend beschriebenen Arten oder ggf. auch durch ausschließliche Messwertaufnahme in den jeweils stationären Bereichen erfolgen.

Die Magnetfelderregung entsprechend dem vierten Messmodus hat besondere Vorteile bei der Messung von Durchflüssen, die periodische Durchflussschwankungen aufweisen, wie sie etwa von Kolbenpumpen oder dgl. im Förderkreis des fließfähigen Mediums hervorgerufen werden können.

Wird nämlich ein etwa periodisch pulsierender Durchflussverlauf mit einer festen Frequenz (oder mit zwei einander periodisch abwechselnden festen Frequenzen) abgetastet, so kann es bei zeitlicher Synchronisation von Messwerterfassung und periodischer Durchflussänderung zu einem Schwebungsverhalten und somit zu einem systematischen Fehler des vorzugsweise eine mittlere Durchflussrate indizierenden Ausgangssignals eines magnetisch-induktiven Durchflussmessers kommen.

Bei dem erfindungsgemäßen Messbetrieb entsprechend dem vierten Messmodus ist gewährleistet, dass sich die Messwerterfassung niemals über längere Zeit auf periodische Durchflussänderungen synchronisiert, so dass bleibende Fehlmessungen vermieden werden. Der nach dem vierten Messmodus betriebene magnetisch-induktive Durchflussmesser nach der Erfindung gibt ein die mittlere Durchflussrate bei periodisch schwankenden Durchflüssen korrekt wiedergebendes Ergebnis aus.

**Patentansprüche**

1. Verfahren zur Messung der Durchflussrate eines fließfähigen Mediums mittels eines magnetisch-induktiven Durchflussmessers,
   wobei man das fließfähige Medium durch ein Messrohr (1) des magnetisch-induktiven Durchflussmessers leitet, ein das Messrohr (1) im Wesentlichen quer zu dessen Längsachse durchsetzendes, geschaltetes Magnetfeld mittels einer elektromagnetischen Spulenanordnung (2) des magnetisch- induktiven Durchflussmessers erzeugt, indem man die Spulenanordnung (2) mit einem Erregerstrom (I) aus einer getakteten Gleichstromquelle (4) betreibt und wobei man eine aufgrund der quer zu dem Magnetfeld verlaufenden Strömung des fließfähigen Mediums induzierte Messspannung (U(t)) zwischen zwei Messelektroden (3, 3') des magnetisch-induktiven Durchflussmessers in Taktzeitintervallen ($\Delta T$) eingeschalteten Spulenstroms mittels einer Messwerterfassungseinrichtung (12 - 22) abtastet,
   wobei man den Spulenstrom (I) mit wenigstens zwei verschiedenen, zeitlich einander abwechselnden Umschaltfrequenzen ($f_1$, $f_2$) schaltet und die Messspannung (U(t)) in vorbestimmter zeitlicher Beziehung vom jeweils vorausgehenden Erregerstrom-Umschaltzeitpunkt in den Taktzeitintervallen eingeschalteten Spulenstroms abtastet,
   **dadurch gekennzeichnet,**
   **dass** man die Anzahl der Perioden ($2\Delta T_1$, $2\Delta T_2$) der einander abwechselnden Umschaltfrequenzen ($f_1$, $f_2$) in unregelmäßiger Weise variiert (Fig. 6).

2. Verfahren nach Anspruch 1, **dadurch gekennzeichnet, dass** man die Messspannung (U(t)) in Taktzeitintervallen ($\Delta T$) eingeschalteten Spulenstroms (I) bereits während eines Zeitabschnittes ($t_a$) abtastet, in dem das gemäß einer charakteristischen Zeitabhängigkeit nach jeder Spulenerregerstromumschaltung einem stationären Zustand ($B_0$) zustrebende Magnetfeld den stationären Zustand ($B_0$) noch nicht erreicht hat, und dass man die betreffenden Abtastwerte ($U_i$) zur Abschätzung der

Durchflussrate des fließfähigen Mediums in dem Messrohr (I) auswertet.

3. Verfahren nach Anspruch 1 oder 2, **dadurch gekennzeichnet, dass** man in den jeweiligen Taktzeitintervallen ($\Delta$T) eingeschalteten Spulenstroms mehrere Abtastwerte ($U_i$) der Messspannung (U(t)) in vorbestimmter zeitlicher Zuordnung zum jeweils vorausgegangenen Umschaltzeitpunkt des Spulenerregerstroms (I) aufnimmt, um die den jeweiligen Taktzeitintervallen ($\Delta$T) zugeordnete Durchflussrate des fließfähigen Mediums abzuschätzen.

4. Verfahren nach Anspruch 3, **dadurch gekennzeichnet, dass** jeder vor Erreichen des stationären Zustandes des Magnetfeldes aufgenommene Abtastwert ($U_i$) mit einem von dessen zeitlicher Zuordnung in dem betreffenden Taktzeitintervall ($\Delta$T) abhängigen Korrekturfaktor korrigiert wird, um die Abtastwerte ($U_i$) auf den Fall der Messung bei stationärem Magnetfeld zu normieren.

5. Verfahren nach Anspruch 1 oder 2, **dadurch gekennzeichnet, dass** man in den jeweiligen Taktzeitintervallen ($\Delta$T) eingeschalteten Spulenstroms jeweils einen einzelnen Abtastwert (U) in vorbestimmter zeitlicher Zuordnung zum jeweils vorausgegangenen Umschaltzeitpunkt des Spulenerregerstroms (I) über ein Abtastintegrationszeitintervall ($T_{int}$) aufnimmt, das sich über den größten Teil des gesamten Taktzeitintervalls ($\Delta$T) erstreckt.

6. Verfahren nach Anspruch 5, **dadurch gekennzeichnet, dass** man jeden Abtastwert (U) mit einem von dessen zeitlicher Zuordnung in dem betreffenden Taktzeitintervall ($\Delta$T) und von der Dauer des Abtastintegrationszeitintervalls (T) abhängigen Korrekturfaktor (k) korrigiert, um die Abtastwerte (U) auf den Fall der ausschließlichen Messung bei stationärem Magnetfeld zu normieren.

7. Verfahren nach einem der vorhergehenden Ansprüche, **dadurch gekennzeichnet, dass** die Messspannung (U(t)) in Zeitabständen bei stationärem Magnetfeld ($B_0$) abgetastet wird und dass die dabei ermittelten Messspannungswerte als Kalibrierungswerte zur Überprüfung und ggf. Korrektur von Messspannungswerten aus Zeitabschnitten ($t_a$) mit stationärem Magnetfeld verwendet werden.

8. Verfahren nach Anspruch 7, **dadurch gekennzeichnet, dass** die Taktzeitintervalle ($\Delta T_2$) bei einer der Frequenzen ($f_2$) hinreichend lang sind, um ein stationäres Magnetfeld ($B_0$) aufzubauen, und dass Kalibrierungswerte in den Taktzeitintervallen ($\Delta T_2$) dieser Frequenz ($f_2$) aufgenommen werden.

9. Verfahren nach Anspruch 7, soweit letzterer auf Anspruch 5 oder 6 rückbezogen ist, **dadurch gekennzeichnet, dass** der Spulenerregerstrom (I) mit einer im Wesentlichen konstanten Umschaltfrequenz geschaltet wird, wobei das Magnetfeld seinen stationären Zustand in jedem Taktzeitintervall ($\Delta$T) erreichen kann, und dass man zur Aufnahme der Kalibrierungswerte das Abtastintegrationszeitintervall ($T_x$) auf einen ausschließlich in den Zeitbereich stationären Magnetfeldes fallenden Wert verkleinert.

10. Verfahren nach einem der Ansprüche 1 - 9, **dadurch gekennzeichnet, dass** die zeitlich einander abwechselnden Umschaltfrequenzen ($f_1$, $f_2$) keine gemeinsamen Harmonischen besitzen.

11. Verfahren nach einem der Ansprüche 1 - 10, **dadurch gekennzeichnet, dass** man die Anzahl der jeweiligen Perioden ($2\Delta T_1$, $2\Delta T_2$) in den einander abwechselnden Periodenzügen der verschiedenen Umschaltfrequenzen ($f_1$, $f_2$) aus einem vorgegebenen Zahlenbereich mittels eines Zufallszahlengenerators bestimmt.

12. Verfahren nach einem der vorhergehenden Ansprüche, **dadurch gekennzeichnet, dass** man die Stromflussrichtung des Spulenerregerstroms (I) im Schalttakt der Gleichstromquelle wechselweise umkehrt und dass man die Messspannung (U(t)) sowohl in den der einen Stromrichtung zugeordneten Zeitintervallen ($\Delta$T) als auch in den der anderen Stromrichtung zugeordneten Taktzeitintervallen ($\Delta$T) abtastet, um Informationen über die Durchflussrate zu gewinnen.

13. Magnetisch-induktiver Durchflussmesser zur Durchführung des Verfahrens nach einem der vorhergehenden Ansprüche, mit einem Messrohr (1) zur Durchleitung eines fließfähigen Mediums, einer elektromagnetischen Spulenanordnung (2) zur Erzeugung eines Magnetfeldes quer zur Strömungsrichtung des fließfähigen Mediums in dem Messrohr (1), zwei Messelektroden (3, 3') zum Abgreifen einer aufgrund der quer zu dem Magnetfeld verlaufenden Strömung des fließfähigen Mediums induzierten Messspannung (U(t)), einer Messwerterfassungseinrichtung (4-22), die eine Gleichstromquelle (6) zur Bereitstellung des Erregerstroms (I) für die Spulenanordnung (2), eine den Spulenerregerstrom (I) taktende Schaltereinrichtung (8, 10), eine die Schaltereinrichtung (8, 10) steuernde Steuerschaltung (12), einen die Messspannung (U(t)) in den Taktzeitintervallen ($\Delta$T) - eingeschalteten Spulenerregerstroms abtastenden Messwertintegrator (20) und eine die vom Messwertintegrator (20) aufgenommenen Messwerte ($U_i$) zur Bestimmung der Durchflussrate auswertende Auswerteeinrichtung (12) umfasst, **dadurch gekennzeichnet, dass** die Zeitsteuerschaltung (12) programmierbar ist und dass die Dauer der Abtastintegrationszeitintervalle des Messwertintegrators (20) oder/und die zeitliche Lage der Abtastintegrationszeitintervalle relativ zu den Umschaltzeitpunkten des Spulenerregerstroms (I) unter Kontrolle der programmierbaren Zeitsteuerschaltung (12) einstellbar sind.

14. Magnetisch-induktiver Durchflussmesser nach Anspruch 13, **dadurch gekennzeichnet, dass** die Schaltereinrichtung (8, 10) die Stromflussrichtung des Spulenerregerstroms (I) unter Kontrolle der Zeitsteuerschaltung (12) wechselweise umschaltet.

15. Magnetisch-induktiver Durchflussmesser nach Anspruch 13 oder 14, **dadurch gekennzeichnet, dass** die Umschaltfrequenz der Schaltereinrichtung (8, 10) unter Kontrolle der Zeitsteuerschaltung (12) einstellbar ist.

16. Magnetisch-induktiver Durchflussmesser nach einem der Ansprüche 13-15, **dadurch gekennzeichnet, dass** die Zeitsteuereinrichtung (12) die Schaltereinrichtung (8, 10) mit wenigstens zwei verschiedenen, zeitlich einander abwechselnden Umschaltfrequenzen ($f_1$, $f_2$) betreibt, dass wenigstens eine dieser Umschaltfrequenzen ($f_2$) so klein ist, dass das Magnetfeld in den zugehörigen Taktzeitintervallen ($\Delta T2$) eingeschalteten Spulenstroms einen stationären Zustand annimmt, und dass der Messwertintegrator (20) jeweils wenigstens einen Abtastwert der Messspannung (U(t)) in den betreffenden Taktzeitintervallen bei stationärem Magnetfeld als Kalibrierungswert für die Überprüfung und ggf. Korrektur während der Taktzyklen der betreffenden anderen Frequenz ($f_1$) aufgenommener Abtastwerte ($U_i$) durch die Auswerteeinrichtung (12) aufnimmt.

17. Magnetisch-induktiver Durchflussmesser nach einem der Ansprüche 13 - 16, **dadurch gekennzeichnet, dass** die an den Messelektroden (3, 3') abgegriffene Messspannung (U(t)) über einen Vorverstärker (14) und ein von der Messwerterfassungseinrichtung kontrolliertes Filter (16) einstellbarer Grenzfrequenz an dem Messwertintegrator (20) anliegt.

18. Magnetisch-induktiver Durchflussmesser nach Anspruch 17, **dadurch gekennzeichnet, dass** dem Filter (16) ein von der Messwerterfassungseinrichtung kontrollierter Verstärker (18) mit einstellbarer Verstärkung nachgeschaltet ist.

19. Magnetisch-induktiver Durchflussmesser nach einem der Ansprüche 13 - 18, **dadurch gekennzeichnet, dass** der Messwertintegrator (20) die Abtastwerte als digitale Messwerte an die Auswerteeinrichtung (12) abgibt.

20. Magnetisch-induktiver Durchflussmesser nach einem der Ansprüche 13-19, **dadurch gekennzeichnet, dass** die Zeitsteuerschaltung (12) die Schaltereinrichtung (8, 10) mit zeitlich einander abwechselnden Periodenzügen wenigstens zweier unterschiedlicher Umschaltfrequenzen ($f_1$, $f_2$) betreibt, wobei die Anzahl der Perioden ($2\Delta T_1$, $2\Delta T_2$) in den jeweiligen Periodenzügen unregelmäßig variiert.

21. Magnetisch-induktiver Durchflussmesser nach Anspruch 20, **dadurch gekennzeichnet, dass** die Zeitsteuerschaltung (12) einen Zufallszahlengenerator umfasst, der laufend die Anzahl der Perioden ($2\Delta T_1$, $2\Delta T_2$) in den jeweiligen Periodenzügen aus einem vorbestimmten Zahlenbereich nach einem Zufallsprinzip auswählt.

22. Magnetisch-induktiver IJurchflussmesser nach Anspruch 20 oder 21, **dadurch gekennzeichnet, dass** die verschiedenen Umschaltfrequenzen ($f_1$, $f_2$) keine gemeinsamen Harmonischen aufweisen.

23. Magnetisch-induktiver Durchflussmesser nach einem der Ansprüche 13-22, **dadurch gekennzeichnet, dass** die Zeitsteuereinrichtung und die Auswerteeinrichtung (12) von einem Mikrocomputer gebildet sind.

<u>Fig.1</u>

<u>Fig.2</u>

Fig. 3

Fig. 4

EP 1 672 330 A2

## Fig. 5

## Fig. 6